Europäisches Patentamt

European Patent Office

Office européen des brevets

(11) Numéro de publication : **0 120 778**
**B1**

# FASCICULE DE BREVET EUROPÉEN

(45) Date de publication du fascicule du brevet :
09.09.87

(51) Int. Cl.⁴ : **B 65 B   3/26**, G 01 G 15/00

(21) Numéro de dépôt : **84400578.5**

(22) Date de dépôt : **21.03.84**

(54) **Procédé et dispositif de remplissage d'un récipient.**

(30) Priorité : **25.03.83 FR 8304951**

(43) Date de publication de la demande :
**03.10.84 Bulletin 84/40**

(45) Mention de la délivrance du brevet :
**09.09.87 Bulletin 87/37**

(84) Etats contractants désignés :
**AT BE CH DE GB IT LI LU NL SE**

(56) Documents cités :
**DE-A- 2 264 217**
**GB-A-   910 435**
**US-A- 3 648 741**

(73) Titulaire : **Etablissements A. Bertaud**
**11 à 15, 6ème Rue Z.I. Sud B.P. No 11**
**F-13127 Vitrolles (FR)**

(72) Inventeur : **Graffin, Jean Jacques**
**Route de Mamers**
**F-72400 La ferte Bernard (FR)**

(74) Mandataire : **Fruchard, Guy et al**
**CABINET BOETTCHER 23, rue la Boétie**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé et un dispositif de remplissage d'un récipient et plus précisément un dispositif de remplissage susceptible de transférer d'un réservoir vers un récipient des quantités prédéterminées de produits de viscosité plus ou moins élevée, homogènes ou non.

Dans un certain nombre d'industries, telles que les industries agro-alimentaire, pétrolière, pharmaceutique ou chimique, il est fréquemment nécessaire d'assurer le conditionnement de quantités prédéterminées de produits liquides ou pâteux, homogènes ou hétérogènes destinés à la vente, ce conditionnement nécessitant le transfert de produits de viscosité plus ou moins élevée d'un réservoir vers un récipient tel qu'une bouteille, un pot, une boîte, etc... Le remplissage de ces récipients se fait généralement en série, à l'aide de machines comportant au moins un poste de remplissage alimenté par au moins un réservoir, les récipients passant devant le poste de remplissage les uns à la suite des autres à une cadence déterminée.

Pour répondre à la réglementation, il est nécessaire de déterminer avec précision la quantité de produit admise dans chaque récipient. En particulier, dans le cas d'un remplissage en série, il est nécessaire que des quantités de produits admises dans tous les récipients correspondent à un volume ou à un poids annoncés, ce volume ou ce poids pouvant figurer sur une étiquette apposée sur chaque récipient. En effet, si le volume ou le poids est inférieur à celui qui est annoncé, l'industriel encourt des sanctions administratives pour non-respect de la réglementation ou des sanctions civiles et pénales de la part des consommateurs pour tromperie sur les quantités vendues. Si, au contraire, le volume ou le poids est supérieur à celui annoncé, l'industriel subit un manque à gagner puisque le récipient rempli est de toute façon vendu à prix fixe et que le produit en excès est donc perdu pour lui.

Il est connu en particulier d'utiliser des dispositifs volumétriques pour le remplissage de récipients, le volume à introduire dans le récipient étant alors mesuré par la dimension de la chambre d'une pompe aspirante-refoulante. Pour la mesure des volumes on peut citer en particulier la mesure de la course d'un piston se déplaçant dans une chemise ou le nombre de tours effectués par une pompe du type à impulseur, à palette, à diaphragme ou d'une pompe péristaltique.

On connaît par ailleurs des dispositifs de dosage pondéral comprenant des balances sur lesquelles les récipients sont disposés pendant le remplissage et un système de commande interrompant le remplissage lorsque la quantité de produits recherchée est atteinte. Les machines les plus sophistiquées de ce type permettent maintenant de mettre en mémoire de façon précise le poids du récipient vide et d'effectuer une correction de la pression de jet de sorte que le poids net de produits introduits dans le récipient peut être mesuré avec une grande précision.

Il est également connu de réaliser des machines dans lesquelles un dosage volumétrique est suivi d'une vérification pondérale en faisant passer rapidement l'emballage sur une balance. Des dispositifs de ce type sont décrits dans les documents GB-A-910 435 et US-A-3 648 741. Toutefois le pesage à la volée ne permet pas d'attendre que le dispositif de pesage soit stabilisé et ne permet pas en outre d'assurer un complément précis de produit dans l'emballage tout en gardant une cadence élevée.

D'autre part, les dispositifs à dosage pondéral existant à ce jour ne permettent généralement pas de conditionner des produits hétérogènes tels que par exemple des confitures contenant des morceaux de fruits ou d'une manière générale des produits fluides contenant des particules solides de dimension non négligeable. En pratique, pour de tels produits, les industriels sont donc amenés à utiliser des machines de remplissage à dosage volumétrique en surdimensionnant le volume introduit dans le récipient afin de s'assurer le respect de la réglementation. Ainsi qu'il a été vu plus haut, une telle pratique aboutit à des coûts plus élevés résultant des quantités de produits mises en excès.

Un but de la présente invention est de proposer un dispositif qui, tout en permettant de s'assurer que le récipient contient bien la quantité de produits souhaitée, assure en même temps une mesure très précise de cette quantité afin de réduire au minimum l'excès de produit dans le récipient, en particulier en cas de produits non homogènes et donc de densité généralement variable.

En vue de la réalisation de ce but, on prévoit selon l'invention un dispositif de remplissage de récipients comportant au moins une unité de remplissage comprenant au moins une trémie reliée à un distributeur comportant un dispositif de dosage volumétrique, un orifice de distribution, un organe de distribution disposé entre la trémie et l'orifice de distribution, un organe de commande de la position de l'organe de distribution et un dispositif de dosage pondéral caractérisé en ce que l'organe de distribution est monté pour prendre une première position dans laquelle le dispositif de dosage volumétrique est relié à la trémie, une seconde position dans laquelle l'orifice de distribution est en liaison avec la trémie et une troisième position dans laquelle l'orifice de distribution est en liaison avec le dispositif de dosage volumétrique.

Ainsi, la combinaison d'une position de dosage volumétrique et d'une position de dosage pondéral sur un même bec de remplissage permet une stabilisation du dispositif de dosage pondéral pendant le dosage volumétrique et la phase de dosage pondéral est donc effectuée très rapidement et avec une grande précision.

Selon un autre aspect de l'invention, la trémie est séparée en deux par une cloison perforée, une partie de la trémie étant en liaison avec le dispositif de dosage volumétrique lorsque l'organe de distribution est dans la première position, et l'autre partie de la trémie étant en liaison avec l'orifice de distribution lorsque l'organe de distribution est dans la seconde position.

Ainsi le dispositif permet la distribution d'un produit hétérogène, la phase liquide, ou la moins visqueuse, du produit étant seule utilisée par le dosage pondéral.

D'autres caractéristiques et avantages de la présente invention apparaîtront mieux à la lecture de la description suivante faite en liaison avec les dessins ci-joints parmi lesquels :

la figure 1 est une vue en coupe schématique suivant la ligne I-I de la figure 2 du dispositif d'alimentation sélectif de la machine de remplissage, objet de l'invention, le dispositif de distribution de produits de remplissage se trouvant en position d'admission du produit dans le dispositif de dosage volumétrique ;

la figure 2 représente une vue en coupe schématique suivant la ligne II-II de la figure 1, le dispositif de distribution se trouvant dans la position du dosage pondéral de finition, la trémie d'alimentation et le dispositif de dosage volumétrique n'étant pas représentés ;

la figure 3 est un diagramme montrant les différentes étapes du procédé selon l'invention.

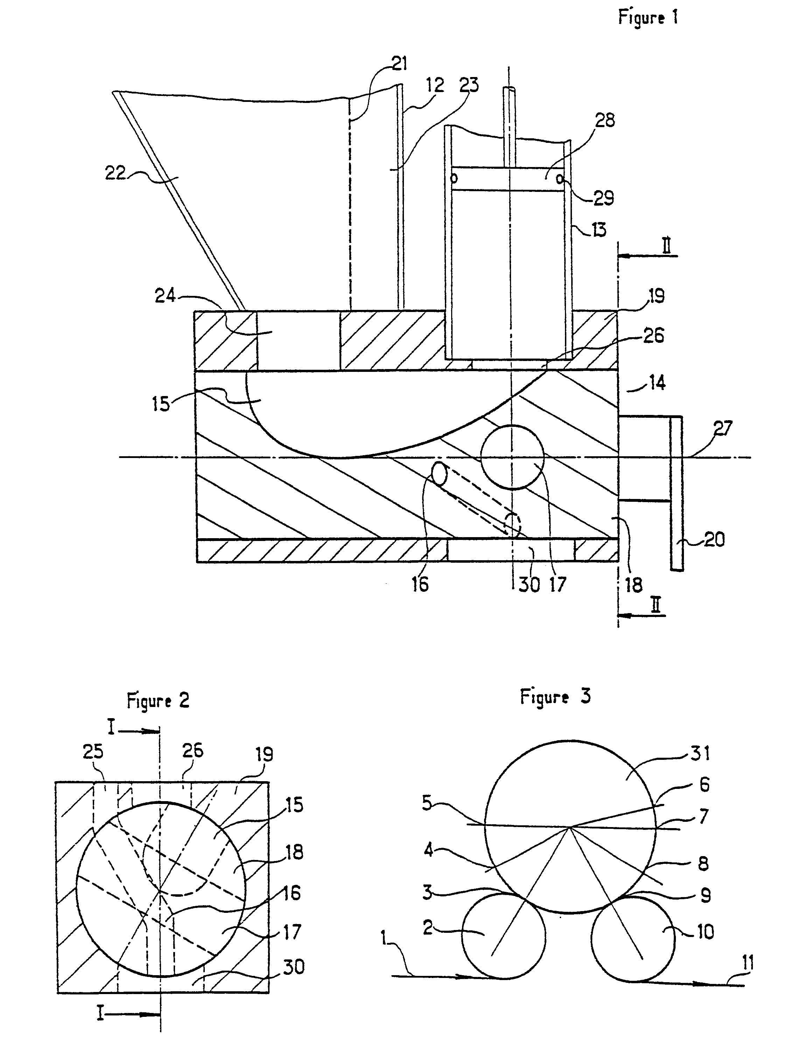

On a représenté en figure 1, une vue schématique du poste de remplissage de la machine, objet de l'invention, qui comprend essentiellement une trémie d'alimentation de produit de remplissage 12, un dispositif de dosage volumétrique 13 et un distributeur 14 comprenant un corps 19 et un boisseau 18 à l'intérieur du corps 19. Le boisseau comporte trois conduits 15, 16 et 17 distincts et est susceptible de tourner à l'intérieur du corps 19. Un levier de commande 20 fixé au boisseau permet de faire tourner celui-ci à l'intérieur du corps 19 autour de son axe principal 27 en fonction des instructions délivrées par un dispositif de commande approprié non représenté, par exemple un dispositif électrique ou pneumatique.

La trémie 12 comporte deux parties séparées par une grille 21. La première partie 22 est destinée à contenir un produit de remplissage non homogène, tandis que la partie 23 recueille une phase homogène du produit de remplissage grâce à l'action de filtrage exercée par la grille 21.

Le corps 19 du distributeur comporte dans sa partie supérieure un premier conduit 24 débouchant à sa partie supérieure dans le fond de la partie 22 de la trémie 12 et à sa partie inférieure sur la surface interne du corps 19. Un deuxième conduit cylindrique vertical 25 (voir figure 2) ménagé dans la partie supérieure du corps 19, débouche à sa partie supérieure dans le fond de la partie 23 de la trémie 12 et à sa partie inférieure sur la face interne du corps du distributeur. Un troisième conduit vertical 26 ménagé dans la partie supérieure du corps du distributeur débouche à sa partie supérieure dans le fond du cylindre 13 du dispositif de dosage volumétrique et à sa partie inférieure sur la face interne du corps du distributeur.

Un piston 28 pourvu d'un dispositif d'étanchéité 29 tel qu'un joint torique est susceptible de se mouvoir verticalement à l'intérieur du cylindre 13 du dispositif de dosage volumétrique. Le cylindre 13 est emboîté dans un alésage cylindrique formé dans la partie supérieure 19 du corps du distributeur.

La partie inférieure du corps 19 du distributeur comporte un orifice 30 disposé à la verticale du cylindre du dispositif du récipient à remplir.

Un conduit 15 est ménagé dans le boisseau 18 généralement parallèlement à l'axe de celui-ci et se présente sous la forme d'un évidement comportant deux parois planes parallèles reliées par un fond arrondi. Les parois planes de l'évidement 15 sont situées de part et d'autre d'un plan de symétrie de l'évidement 15, qui contient l'axe 27 du boisseau, et coïncident sensiblement avec le diamètre du conduit 26 lorsque le boisseau est dans la position représentée sur la figure 1 afin de permettre une liaison entre la partie 22 de la trémie 12 et le dispositif de dosage volumétrique 13.

Un conduit 16 traverse le boisseau 18 de façon à mettre en communication le conduit vertical 25 et l'orifice 30 lorsque le boisseau 18 se trouve dans une position angulaire appropriée par rapport au corps 19. Un conduit 17 traverse le boisseau 18 de façon à mettre en communication le conduit vertical 26 et l'orifice 30 lorsque le boisseau se trouve dans une position angulaire appropriée par rapport au corps 19 du distributeur. Le diamètre du conduit 17 et l'écart entre le fond arrondi de l'évidement 15 et l'axe 27 du boisseau sont tels qu'il n'y a pas de communication entre le conduit 17 et l'évidement 15.

Comme on peut le voir sur la figure 2, les positions respectives des conduits 15, 16 et 17 dans le boisseau 18 sont telles que dans une première position angulaire du boisseau 18 dans le corps 19 du distributeur les conduits verticaux 24 et 26 sont mis en communication par l'intermédiaire de l'évidement 15, dans une deuxième position angulaire du boisseau 18, l'orifice 30 est relié au conduit vertical 25 et dans une troisième position angulaire du boisseau 18 l'orifice 30 est en communication avec le conduit vertical 26 et le cylindre du dispositif du dosage volumétrique.

On a représenté sur la figure 3 un diagramme où sont indiquées schématiquement les différentes parties du trajet des récipients à remplir au cours d'un cycle de remplissage. D'une manière usuelle, les récipients à remplir sont acheminés vers le poste de remplissage par un dispositif de convoyage connu en soi lors d'une première partie de leur trajet 1, puis ils sont introduits sur un plateau de remplissage 31 par un moyen de transfert connu tel qu'une étoile de distribution 2. Le plateau de remplissage étant entraîné en rotation, un récipient donné va d'abord parcourir un premier arc de cercle compris entre son point d'entrée 3 sur le plateau et un point 4. Une deuxième partie du trajet, entre les points 4 et 5, est utilisée pour réaliser le tarage du dispositif de pesée, qui est remis à zéro pour chaque récipient selon des moyens connus en soi.

Le boisseau du distributeur se trouve pendant ce temps dans la position représentée en figure 1, c'est-à-dire qu'il permet l'aspiration d'une dose de produit de remplissage, du réservoir de produit vers le dispositif de dosage volumétrique.

Lorsque le récipient arrive au point 5, un dispositif de commande approprié relié au plateau de remplissage commande la rotation du boisseau du distributeur, qui met en communication le doseur volumétrique préalablement rempli, et l'orifice de remplissage 30, le remplissage s'effectuant sous la pression du piston du doseur volumétrique, qui refoule la dose de produit précédemment admise dans le cylindre vers le récipient à remplir.

La phase de remplissage avec dosage volumétrique se prolonge jusqu'à ce que le récipient arrive au point 6. Le distributeur interrompt alors la communication du dispositif de dosage volumétrique contenant le produit hétérogène et du récipient, par une rotation du boisseau commandée par un dispositif approprié agissant sur le levier 20.

On procède alors à une phase de remplissage avec dosage pondéral, le récipient à remplir poursuivant son trajet entre les points 6 et 7. Le dosage pondéral intervient donc uniquement en complément du dosage volumétrique précédemment réalisé, le boisseau 18 étant alors dans la position qui met directement l'ouverture 25 en liaison avec l'ouverture 30 formant bec de remplissage.

On remarquera à ce propos qu'il est inutile de décrire ici en détail le dispositif de dosage pondéral puisque celui-ci est connu en soi. On pourra en particulier utiliser une série de balances émettant un signal proportionnel au poids sur le plateau de chaque balance, chaque signal étant traité par un microprocesseur disposant d'une mémoire dans laquelle a été saisi le poids du récipient vide pendant le parcours 4-5 du récipient.

La mise à jour des réglages du microprocesseur se fait au moment de la vérification finale du poids du récipient rempli, celui-ci parcourant alors le trajet situé entre les points 7 et 8. Cette phase de vérification permet de connaître le poids définitif du récipient rempli. Si celui-ci est incorrect, le dispositif électronique de réglage éliminera le récipient ou fera simplement la correction pour le tour suivant.

La phase de pesée finale permet également de détecter et éventuellement d'écarter de la chaîne de remplissage les récipients présentant un défaut d'étanchéité, dont le poids s'avère instable au cours de cette phase.

Un dispositif d'affichage approprié permet d'afficher à volonté le poids de chaque récipient rempli, ou, de façon cyclique, le poids de certains récipients seulement.

Le récipient rempli du poids désiré du produit arrive enfin au point 9 où son évacuation vers un poste de travail ultérieur tel qu'un poste de fermeture est assurée par l'intermédiaire d'un dispositif de transfert approprié 10 relié à un dispositif de convoyage 11.

Bien qu'on ait représenté et décrit une trémie unique 12 pour le produit de remplissage comprenant une grille de séparation délimitant une partie de trémie contenant une phase hétérogène du produit de remplissage et une partie de trémie contenant une phase homogène du produit de remplissage, il est également possible de prévoir deux réservoirs distincts, l'un contenant un premier produit de remplissage et l'autre contenant un deuxième produit de remplissage destiné à compléter le remplissage d'un récipient pour ajuster le poids de produit contenu dans le récipient.

D'autre part, bien qu'il ait été décrit et représenté un dispositif de dosage volumétrique comportant un cylindre dans lequel se meut un piston, il est également possible d'utiliser pour le dosage volumétrique tout autre moyen permettant la manipulation d'un produit de remplissage non homogène, en particulier une pompe du type à impulseur, à palette, à diaphragme ou péristaltique.

D'autre part, bien qu'on ait décrit un distributeur à trois positions comportant un boisseau, on peut également utiliser pour mettre sélectivement en communication le ou les réservoirs de produits de remplissage, le dispositif de dosage volumétrique, et un orifice du récipient à remplir, un dispositif de distribution comportant un moyen de guidage et d'interruption de flux autre qu'un boisseau, tel qu'une vanne de type à glace, à tiroir ou à clapet.

De plus, l'interruption du flux de produit de remplissage homogène, à la fin du dosage pondéral, peut ne pas être assurée par le boisseau lui-même, mais plutôt par un dispositif complémentaire situé en amont du boisseau.

Enfin, bien que la présente description soit relative à une unité de remplissage et de dosage comportant un distributeur, il va de soi qu'on peut envisager, pour augmenter le rendement d'une machine de remplissage et de dosage utilisant un tel dispositif d'équiper la machine d'une pluralité d'unités de dosage et de remplissage telle que décrite précédemment, chaque unité comprenant un distributeur commandé par un dispositif électronique pneumatique approprié relié à un calculateur prenant en compte les paramètres de fonctionnement relatifs à chaque unité de remplissage et de dosage.

**Revendications**

1. Dispositif de remplissage de récipients comportant au moins une unité de remplissage comprenant au moins une trémie (12) reliée à un distributeur comportant un dispositif de dosage volumétrique (13), un orifice de distribution (30), un organe de distribution (18) disposé entre la trémie (12) et l'orifice de distribution (30), un organe de commande (20) de la position de l'organe de distribution (18) et un dispositif de dosage pondéral, caractérisé en ce que l'organe de distribution est monté pour prendre une première position dans laquelle le dispositif de dosage volumétrique (13) est relié à la trémie (12), une seconde position dans laquelle l'orifice de distribution (30) est en liaison avec la trémie (12) et une troisième position dans laquelle l'orifice de distribution (30) est en liaison avec le dispositif de dosage volumétrique (13).

2. Dispositif de remplissage de récipient selon la revendication 1 caractérisé en ce que la trémie (12) est séparée en deux par une cloison perforée (21), une partie (22) de la trémie étant en liaison avec le dispositif de dosage volumétrique (13) lorsque l'organe de distribution (18) est dans la première position, et l'autre partie (23) de la trémie étant en liaison avec l'orifice de distribution (30) lorsque l'organe de distribution (18) est dans la seconde position.

## Claims

1. Apparatus for filling containers including at least one filling unit comprising at least one hopper (12) connected to a distributor comprising a volumetric metering device (13), a distribution orifice (30), a distribution member (18) disposed between the hopper (12) and the distribution orifice (30), a control member (20) for controlling the position of the distribution member (18), and a weight metering device, characterised in that the distribution member is mounted to occupy a first position in which the volumetric metering device (13) is connected to the hopper (12), a second position in which the distribution orifice (30) communicates with the hopper (12), and a third position in which the distribution orifice (30) communicates with the volumetric metering device (13).

2. A container filling apparatus according to claim 1 characterised in that the hopper (12) is divided into two by a perforated partition (21), one part (22) of the hopper communicating with the volumetric metering device (13) when the distribution member (18) is in the first position and the other part (23) of the hopper communicating with the distribution orifice (30) when the distribution member (18) is in the second position.

## Patentansprüche

1. Vorrichtung zum Füllen von Behältern mit wenigstens einer Fülleinheit, die wenigstens einen an einen Verteiler angeschlossenen Trichter (12) umfaßt, wobei der Verteiler eine Einrichtung (13) zur volumetrischen Dosierung, eine Verteileröffnung (30), ein zwischen dem Trichter (12) und der Verteileröffnung (30) angeordnetes Verteilerorgan (18), ein Steuerorgan (20) für die Position des Verteilerorgans (18) und eine Einrichtung zur gewichtsmäßigen Dosierung aufweist, dadurch gekennzeichnet, daß das Verteilerorgan so angeordnet ist, daß es eine erste Stellung, in der die Einrichtung (13) zur volumetrischen Dosierung mit dem Trichter (12) verbunden ist, eine zweite Stellung, in der die Verteileröffnung (30) in Verbindung mit dem Trichter (12) ist, und eine dritte Stellung, in der die Verteileröffnung (30) in Verbindung mit der Einrichtung (13) zur volumetrischen Dosierung ist, einnimmt.

2. Vorrichtung zum Füllen von Behältern nach Anspruch 1, dadurch gekennzeichnet, daß der Trichter (12) durch eine perforierte Trennwand (21) zweigeteilt ist, wobei ein Teil (22) des Trichters in Verbindung mit der Einrichtung (13) zur volumetrischen Dosierung ist, wenn das Verteilerorgan (18) in der ersten Stellung ist, und der andere Teil (23) des Trichters in Verbindung mit der Verteileröffnung (30) ist, wenn das Verteilerorgan (18) in der zweiten Stellung ist.

Figure 1

Figure 2

Figure 3